# EUROPÄISCHE PATENTSCHRIFT

(11) **EP 2 862 895 B1**
(45) Veröffentlichungstag und Bekanntmachung des Hinweises auf die Patenterteilung: **31.01.2018**
(21) Anmeldenummer: 14187300.0
(22) Anmeldetag: 01.10.2014
(51) Int. Cl.: C08K 3/34, C08L 77/00

(54) **Thermoplastische Formmassen**
Thermoplastic moulding materials
Masse de formage thermoplastique

(30) Priorität: 15.10.2013 EP 13188758
(43) Veröffentlichungstag der Anmeldung: 22.04.2015
(73) Patentinhaber: LANXESS Deutschland GmbH, 50569 Köln (DE)
(72) Erfinder: Benighaus, Tobias, 48145 Münster (DE); Joachimi, Detlev, 47800 Krefeld (DE); Weider, Richard, 51381 Leverkusen (DE); Wolff, Oliver, 50259 Pulheim-Brauweiler (DE)

(56) Entgegenhaltungen:
- EP-A1- 0 023 635
- WO-A1-94/25530
- WO-A1-2009/156342
- US-A1- 2004 030 025

## Beschreibung

Die vorliegende Erfindung betrifft Mischungen für thermoplastische Formmassen auf Basis von Polyamiden mit dem mineralischen Füllstoff Aluminiumsilikat, vorliegend in der triklin pinakoidalen Modifikation, und wenigstens einem Wärmestabilisator sowie wenigstens einem Zusatzstoff, deren Herstellung sowie daraus herzustellender elektrisch isolierender, thermisch leitfähiger Erzeugnisse, insbesondere Formteile und Halbzeuge,

Thermoplastische Polymere werden wegen ihrer guten elektrisch isolierenden Eigenschaften für zahlreiche Anwendungen in der Elektroindustrie eingesetzt. Sie wirken aufgrund ihrer geringen Wärmeleitfähigkeit aber auch thermisch isolierend, was beim Einsatz für elektrische Bauteile dann ein Problem darstellt, wenn relativ viel Wärme entsteht, die abgeführt werden muss. Die elektrische und thermische Leitfähigkeit von Thermoplasten lässt sich durch Additive über einen weiten Bereich modifizieren. So wird durch Zusatz von z. B. Graphit sowohl die elektrische, als auch die thermische Leitfähigkeit erhöht. Für die Erhöhung der thermischen Leitfähigkeit unter Beibehaltung einer sehr geringen elektrischen Leitfähigkeit, wie sie für Anwendungen in der Elektroindustrie erforderlich ist, gibt es hingegen nur wenige Lösungen.

In der Dissertationsschrift von Wolfgang Übler (Universität Erlangen-Nürnberg Publikation 17.Juli 2004) zum Thema "Erhöhung der thermischen Leitfähigkeit elektrisch isolierender Polymerwerkstoffe" wird ein Verfahren beschrieben, Gießharze mit thermisch gut leitfähigen, elektrisch isolierenden pulverigen Füllkomponenten so hoch zu füllen, dass die Wärmeleitfähigkeit des resultierenden Gießharzes maximiert wird. Dieses Ziel wurde mit kommerziellen keramischen Pulverfraktionen wie Aluminiumoxid, Siliziumkarbid, Bornitrid, Quarzgut, Quarzmehl, die üblicherweise zur Schleifkörperherstellung verwendet werden, erreicht. Die Erhöhung der Wärmeleitfähigkeit thermoplastischer Formmassen und daraus herzustellender Erzeugnisse durch Zusatz von Aluminiumoxid (α-Al₂O₃) ist bekannt und in einer Reihe von Anmeldungen beschrieben.

DE 102 60 098 A1 führt aus, dass thermoplastische Polyester durch Zusatz von Aluminiumoxid elektrisch isolierend und wärmeleitfähig sind. Als weitere Zusatzstoffe werden niedermolekulare und polymere organische Verbindungen aufgeführt.

WO 2003/051971 A2 betrifft flexible Compounds auf Basis eines thermoplastischen Elastomers, insbesondere basierend auf Polyamid mit 72,3 Gew.-% Aluminiumoxid mit einer thermischen Leitfähigkeit von 1,1 W/mK bei 40 °C zur Herstellung wärmeleitfähiger Schläuche, die insbesondere als Heiz- oder Kühlschlauch eingesetzt werden können.

Auch JP 2004 059638 A2 beschreibt Polyamid Zusammensetzungen mit hervorragenden Eigenschaften in Bezug auf Wärmeleitfähigkeit, Beständigkeit gegen Hitze, niedrige Absorption von Wasser und Anwendung im Spritzguss. Offenbart werden zudem Beispiele auf Basis von PA 6T , PA 9MT und PA 66 (PA = Polyamid), die mit dem Wärmeleitfähigkeitsadditiv Nippon Light Metal Manufacturing Alumina, "LS130" additiviert wurden.

JP 2005 112908 A2 lehrt den Einsatz von Aluminiumoxid-gefülltem Polyamid als elektrischem Isolator bei guter thermischer Leitfähigkeit. Die erhaltenen Produkte werden insbesondere für die Verwendung von Kabelummantelungen beschrieben, die über 50 Stunden unter 2000 Volt funktionstüchtig bleiben.

Der Einsatz von Graphit in Polyamid-Compounds ist umfangreich beschrieben, wobei jedoch die elektrische Leitfähigkeit der resultierenden Formmassen im Vordergrund steht.

DE 36 44 773 A1 beschreibt Polyamid Harzmassen, die Glasfasern und Graphit enthalten, mit denen inheränte Oberflächenwiderstände bis lediglich 2,2·10⁴ Ω erzielt werden.

JP 2003 165904 A beschreibt ein graphithaltiges, elektrisch leitfähiges Polyamid-Compound mit besonders guter Schlagzähigkeit, die durch Zusatz von Kautschuk erzielt wird.

Die in US-A 6 228 288 beschriebenen, auf Polyamid und Graphit basierenden Materialien sollen sich aufgrund ihrer elektrischen Leitfähigkeiten zum Einsatz für Sensoren eignen.

In JP 2007 016093 A wird eine Zusammensetzung aus thermoplastischen Polymeren und 1-50 % Graphit mit verbesserter thermischer Leitfähigkeit von 1,6 W/mK beschrieben.

WO 2009/019186 A1 beschreibt elektrisch isolierende wärmeleitfähige Polyamidcompounds, die sowohl Aluminiumoxid als auch Graphit enthalten.

EP 0 023 635 A1 offenbart thermoplastische Formmassen enthaltend 5 - 130 Gew.-Teile (bezogen auf 100 Ges.-Teile Polyamid) eines silanmodifizierten Füllstoffes, 5 bis 500 ppm (bezogen auf Polyamid) Kupfer sowie ggf. Zusatzstoffe und Hilfsmittel. In Beispiel 1 wird ein Aluminiumsilikat mit 52,3% SiO₂ und 44,5% Al₂O₃ eingesetzt.

WO 94/25530 A1 offenbart Mischungen enthaltend 50% Kaolin, 39 - 49% Polyamid, 0 - 10% PA6.6, 0,3% Wärmestabilisator und 0,25% Nucleant.

WO 2009/156342A2 betrifft thermoplastische Formmassen enthaltend A) 19,9 bis 69,99 Gew.-% eines thermoplastischen Polyamids, B) 30 bis 80 Gew.-% eines Aluminiumoxids, C) 0,01 bis 30 Gew.-% Diatomeenerde, D) 0 bis 30 Gew.-% weiterer Zusatzstoffe, wobei die Summe der Gewichtsprozente A) bis D) 100% ergibt.

US 2004/0030025 A1 beschreibt vielseitig einsetzbare Additive für polymere Materialien die Mischungen von Silica und Aluminium darstellen, beide in amorpher Form vorliegend und reaktiv im Hinblick auf die polymeren Mischungen zu einer Verbesserung der thermischen Leitfähigkeit dieser Materialien führen.

Polyamidcompounds werden häufig in Anwendungen mit hohen mechanischen Anforderungen eingesetzt. Daher sind gute mechanische Eigenschaften neben der Wärmeleitfähigkeit und dem elektrischen Widerstand eine weitere wichtige Anforderung an Polyamidcompounds. Der Einsatz von Aluminium-Oxid und Graphit in Polyamid-compounds zur Verbesserung der Wärmeleitfähigkeit hat jedoch eine deutliche Versprödung des Compounds bzw. daraus herzustellender Erzeugnisse zur Folge. Polyamidcompounds/Erzeugnisse hergestellt aus Formmassen unter Einsatz von Graphit und Aluminium-Oxid weisen eine nur geringe Performance in Bezug auf die Verformungsbeständigkeit (Bruchdehnung) und in Bezug auf die Schlagzähigkeit auf. Die Bruchdehnung ist ein Materialkennwert, der die bleibende Verlängerung einer Probe nach dem Bruch, bezogen auf die Anfangsmesslänge, angibt und stellt damit eine wesentliche Kenngröße zur Charakterisierung der Verformungsfähigkeit (bzw. Duktilität) eines Werkstoffes dar (http://de.wikipedia.org/wiki/Bruchdehnung).

Die Schlagzähigkeit hingegen beschreibt die Fähigkeit eines Werkstoffes, Stoßenergie und Schlagenergie zu absorbieren ohne zu brechen. Die Schlagzähigkeit wird berechnet als das Verhältnis aus Schlagarbeit und Probekörperquerschnitt (Maßeinheit kJ/m²). Durch verschiedene Arten des Schlagbiegeversuchs, Charpy nach ISO 179-1 oder Izod nach ISO 180, kann die Schlagzähigkeit bestimmt werden. Im Unterschied zur Kerbschlagzähigkeit wird bei der Prüfung der Schlagzähigkeit der Probekörper nicht eingekerbt (siehe hierzu: http://de.wikipedia.org/wiki/Schlagz%C3%A4higkeit oder aber auch "Schlagbiegeversuch", PSM, Polymer Service GmbH Merseburg, unter http://wiki.polymerservice-merseburg.de/index.php/Schlagbiegeversuch).

Aufgrund des Einsatzes von Graphit und Aluminium-Oxid weisen Polyamidcompounds bzw. daraus hergestellte Erzeugnisse gegenüber einer Schlagbelastung nur geringe Widerstandskraft auf. Des Weiteren ist der Einsatz von Graphit in großtechnischen Produktionsanlagen unbeliebt. Graphit bildet aufgrund der niedrigen Dichte und Partikelgröße leicht Stäube, die elektrisch leitend sind und oberhalb von 350 °C glimmen können. Mit diesen Eigenschaften gehen Gefahren für Menschen und elektronische Geräte einher.

Andererseits führt der Einsatz von Aluminium-Oxid in der Verarbeitung von Polyamid-compounds zu einer verstärkten Abnutzung der eingesetzten Geräte infolge der Härte des Aluminium-Oxids. Bei einer Extrusion sind besonders Schnecke, Schneckengehäuse und Düse betroffen. Bei einer Verarbeitung im Spritzgussprozess wird zusätzlich die Abnutzung der Spritzgussform deutlich erhöht.

Polyamidcompounds mit verbesserter Wärmeleitfähigkeit werden üblicherweise in der Nähe von Wärmequellen eingesetzt. Daher sind die Bauteile aus solchen Polyamidcompounds häufig erhöhten Temperaturen ausgesetzt.

Poiyamidcompounds und daraus herzustellende Erzeugnisse zeigen im Allgemeinen eine Verschlechterung ihrer mechanischen Eigenschaften, wenn sie über einen längeren Zeitraum erhöhten Temperaturen ausgesetzt werden. Dieser Effekt basiert primär auf der oxidativen Schädigung des Polymers bei erhöhten Temperaturen (thermooxidative Schädigung). Ein längerer Zeitraum im Sinne der vorliegenden Erfindung bedeutet länger als 100 Stunden, erhöhte Temperaturen im Sinne der vorliegenden Erfindung bedeutet höher als 80 °C.

Die Stabilität thermoplastischer Formmassen und daraus herzustellender Erzeugnisse gegen thermooxidative Schädigung wird üblicherweise anhand eines genormten Probekörpers, als Beispiel für ein Erzeugnis, durch den Vergleich mechanischer Eigenschaften, insbesondere der Schlagzähigkeit, der im Zugversuch nach ISO 527 gemessenen Bruchspannung und Bruchdehnung sowie des E-Moduls bei definierter Temperatur über einen definierten Zeitraum beurteilt.

Aufgabe der vorliegenden Erfindung war deshalb die Bereitstellung thermoplastischer Formmassen auf Basis von Polyamid zur Herstellung von Erzeugnissen, die eine hohe thermische Leitfähigkeit aufweisen und sich gleichzeitig durch elektrisch isolierende Eigenschaften und gute mechanische Eigenschaften auszeichnen, wobei die mechanischen Eigenschaften von erhöhten Temperaturen nur nach längeren Zeiträumen signifikant beeinträchtigt werden. Des Weiteren sollen die oben genannten Nachteile, die mit dem Einsatz von Aluminium-Oxid einhergehen, vermieden werden.

Überraschenderweise wurde gefunden, dass thermoplastische Formmassen auf Basis von Polyamid und daraus hergestellte Erzeugnisse, die neben Aluminiumsilikat auch noch wenigstens einen Wärmestabilisator enthalten, sich durch erhöhte Wärmeleitfähigkeit und gute mechanische Eigenschaften auch nach längerer Exposition bei höheren Temperaturen auszeichnen, ohne dass die oben genannten Nachteile in der Verarbeitung dieser thermoplastischen Formmassen zu beobachten waren.

Des Weiteren wurde überraschenderweise gefunden, dass die Wärmeleitfähigkeit thermoplastischer Formmassen auf Basis von Polyamid und daraus hergestellte Erzeugnisse mit Aluminiumsilikat, vorliegend in der triklin pinakoidalen Modifikation (Symbolik nach Hermann-Mauguin) (Kyanit), gegenüber thermoplastischen Formmassen mit Aluminiumsilikat, vorliegend in der triklin pedialen Modifikation (Kaolin), nochmals erhöht ist.

**Lösung der Aufgabe** und somit Gegenstand der Erfindung sind deshalb Mischungen für thermoplastische Formmassen enthaltend
a. 5 bis 69,94 Gew.-% Polyamid,
b. 30 bis 80 Gew.-% triklin pinakoidales Aluminiumsilikat,
c. 0,05 bis 5 Gew.-% wenigstens eines Wärmestabilisators und
d. 0,01 bis 60 Gew.-% wenigstens eines weiteren Zusatzstoffes,
wobei die Summe aller Gewichtsprozente stets 100 Gew.-% ergibt.

Zur Klarstellung sei angemerkt, dass vom Rahmen dieser Erfindung alle nachfolgend aufgeführten, allgemeinen oder in Vorzugsbereichen genannten Definitionen und Parameter in beliebigen Kombinationen umfasst sind. Ferner sei angemerkt, dass im Rahmen der vorliegenden Erfindung Aluminiumsilikat in triklin pinakoidaler Modifikation vereinfacht auch als triklin pinakoidales Aluminiumsilikat oder als Kyanit bezeichnet wird.

Die Zubereitung der erfindungsgemäßen Mischungen für eine weitere Nutzung erfolgt durch Mischen der als Edukte einzusetzenden Komponente a., b., c. und d. in wenigstens einem Mischwerkzeug. Hierdurch werden als Zwischenprodukte, auf den erfindungsgemäßen Mischungen basierende Formmassen erhalten. Diese Formmassen - auch als thermoplastische Formmassen bezeichnet - können entweder ausschließlich aus den Komponenten a., b., c. und d. bestehen, oder aber zusätzlich zu den Komponenten a., b., c. und d. noch weitere Komponenten enthalten. In diesem Fall sind die Komponenten a., b., c. und d. im Rahmen der angegebenen Mengenbereiche so zu variieren, dass die Summe aller Gewichtsprozente stets 100 ergibt.

**Gegenstand der Erfindung** sind zudem für den Einsatz in der Extrusion, beim Blasformen oder im Spritzguß vorgesehene Polyamid-Formmassen, bevorzugt in Granulatform, enthaltend die erfindungsgemäßen Mischungen, die 95 bis 100 Gew.-%, bevorzugt 98 bis 100 Gew-%, besonders bevorzugt 99 bis 100 Gew.-% der erfindungsgemäßen bzw. erfindungsgemäß zur Herstellung von elektrisch isolierenden aber thermisch leitfähigen Erzeugnissen einzusetzenden Polyamid-Formmassen ausmachen.

In einer bevorzugten Ausführungsform enthalten die erfindungsgemäßen Mischungen für thermoplastische Formmassen die Komponente b. triklin pinakoidales Aluminiumsilikat zu 40 bis 80 Gew.-%, besonders bevorzugt zu 50 bis 80 Gew.-%, ganz besonders bevorzugt zu 60 bis 80 Gew.-%.

Die als Komponente a. einzusetzenden Polyamide sind bevorzugt amorphe oder semikristalline Polyamide, besonders bevorzugt sind semikristalline Polyamide mit einem Schmelzpunkt von mindestens 180 °C oder amorphe Polyamide mit einer Glasübergangstemperatur von mindestens 150 °C.

Semikristalline Polyamide besitzen gemäß DE 10 2011 084 519 A1 eine Schmelzenthalpie von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357beim 2. Aufheizen und Integration des Schmelzpeaks.

In einer bevorzugten Ausführungsform wird als Komponente a. auch ein Blend unterschiedlicher Polyamide eingesetzt.

Bevorzugt wird als Komponente a. aliphatisches oder semi-aromatisches Polyamid, insbesondere Polyamid 6 (PA 6) oder Polyamid 66 (PA 66) oder ein Co-Polyamid von PA6 oder PA66 eingesetzt. Insbesondere ganz besonders bevorzugt wird PA 6 eingesetzt.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA 6, so bedeutet dies, dass von einer α,ω-Aminocarbonsäure bzw. von dem davon abgeleiteten Lactam, im Falle des PA 6 also dem ε-Caprolactam, ausgegangen worden ist; im Übrigen sei verwiesen auf H. Domininghaus, Die Kunststoffe und ihre Eigenschaften, Seiten 272 ff., VDI-Verlag, 1976.

Bevorzugt wird als Komponente a. ein Polyamid mit einer Viskositätszahl bestimmt in einer 0,5 gew.-%igen Lösung in 96 gew.-%iger Schwefelsäure bei 25 °C gemäß ISO 307 von 80 bis 170 ml/g, besonders bevorzugt von 90 bis 150 ml/g, ganz besonders bevorzugt zwischen 90 und 130 ml/g, insbesondere besonders bevorzugt zwischen 95 und 120 ml/g eingesetzt.

In einer besonders bevorzugten Ausführungsform wird als Komponente a. ein Polyamid 6 mit einer Viskositätszahl bestimmt in einer 0,5 gew.-%igen Lösung in 96 gew.-%iger Schwefelsäure bei 25 °C gemäß ISO 307 zwischen 95 und 120 ml/g eingesetzt.

Die in den erfindungsgemäßen thermoplastischen Formmassen einzusetzenden Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine sowie verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der erfindungsgemäß einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

Erfindungsgemäß bevorzugt einzusetzende Polyamide sind semikristalline Polyamide, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 2-Methylpentan-1,5-diamin, 1,9-Nonandiamin, 2,2,4- und 2,4,4-Trimethylhexamethylendiamin, die Isomeren Diamino-dicyclohexylmethan, Diaminodicyclohexylpropan, Bisaminomethyl-cyclohexan, Phenylendiamin, Xylylendiamin, Aminocarbonsäuren, insbesondere Aminocapronsäure, oder die entsprechenden Lactame in Betracht. Copolyamide aus mehreren der genannten Monomeren sind eingeschlossen.

Erfindungsgemäß besonders bevorzugt als Komponente a. einzusetzende Polyamide werden aus Caprolactam, ganz besonders bevorzugt aus ε-Caproiactam hergestellt.

Insbesondere besonders bevorzugt sind weiterhin die meisten auf PA 6, PA 66 und andere auf aliphatischen oder/und aromatischen Polyamiden bzw. Copolyamiden basierenden Compounds, bei denen auf eine Polyamidgruppe in der Polymerkette 3 bis 11 Methylengruppen kommen.

Als Komponente b. enthalten die erfindungsgemäßen Formmassen 30 bis 80 Gew.-% Aluminiumsilikat, vorliegend in der triklin pinakoidalen Modifikation.

Das im Rahmen der vorliegenden Erfindung einzusetzende Mineral ist Al₂O₃SiO₂, vorliegend in der triklin pinakoidalen Modifikation, das mit Eisen- und/oder Chrom-Verbindungen verunreinigt sein kann. Erfindungsgemäß bevorzugt wird das Kyanit, also das in triklin pinakoidaler Modifikation vorliegende Al₂O₃SiO₂ mit weniger als 1 Gew.-%, besonders bevorzugt mit weniger als 0,5 Gew.-% Verunreinigungen eingesetzt.

Bevorzugt wird das in triklin pinakoidaler Modifikation vorliegende Aluminiumsilikat als Pulver eingesetzt. Bevorzugte Pulver weisen eine mittlere Partikelgröße d₅₀ von maximal 500 µm, bevorzugt 0,1 bis 250 µm, besonders bevorzugt 0,5 bis 150 µm, ganz besonders bevorzugt 0,5 bis 70 µm auf (gemäß ASTM D 1921-89, Methode A) wodurch die feine Verteilung im Thermoplasten bzw. in den erfindungsgemäßen Mischungen und thermoplastischen Formmassen gewährleistet wird.

Die erfindungsgemäß zu verwendenden und in triklin pinakoidaler Modifikation vorliegenden Aluminiumsilikat Partikel können in unterschiedlichen Formen vorliegen, die durch das Aspektverhältnis beschrieben werden können. Bevorzugt werden Partikel mit einem Aspektverhältnis von 1 bis 100, besonders bevorzugt 1 bis 30, ganz besonders bevorzugt 1 bis 10 eingesetzt.

Die erfindungsgemäß zu verwendenden triklin pinakoidalen Aluminiumsilikat Partikel, auch als Kyanit-Partikel bezeichnet, können mit und ohne Oberflächenmodifizierung eingesetzt werden. Als Oberflächenmodifizierung werden organische Kopplungsmittel bezeichnet, welche die Anbindung an die thermoplastische Matrix verbessern sollen. Als Oberflächenmodifizierung werden bevorzugt Aminosilane oder Epoxysilane eingesetzt. In einer bevorzugten Ausführungsform werden die erfindungsgemäß zu verwendenden Kyanit-Partikel ohne Oberflächenmodifizierung eingesetzt. Anbieter von Kyanit ist beispielsweise Quarzwerke GmbH, Frechen, die das Kyanit als Al₂O₃SiO₂ unter Silatherm® vertreiben.

Die erfindungsgemäßen Formmassen enthalten als Komponente c. wenigstens einen Wärmestabilisator.

Bevorzugte Wärmestabilisatoren sind Stoffe ausgewählt aus der Gruppe bestehend aus sterisch gehinderten Phenolen, sterisch gehinderten Phosphiten, sterisch gehinderten Phosphaten, Hydrochinonen, aromatischen sekundären Amine, substituierten Resorcinen, Salicylaten, Benzotriazolen, Benzophenonen oder Kupferhalogeniden, gegebenenfalls in Kombination mit Alkali- und/oder Erdalkalimetallhalogeniden aber auch Manganchlorid, sowie verschieden substituierte Vertreter aller vorgenannten Verbindungen und deren Mischungen. Sterische Hinderung bezeichnet in der organischen Chemie den Einfluss der räumlichen Ausdehnung eines Moleküls auf den Verlauf einer Reaktion. Der Begriff, erstmals 1894 von Victor Meyer für die Beobachtung geprägt, beschreibt das Phänomen, dass manche Reaktionen nur sehr langsam oder gar nicht ablaufen, wenn sich in der Umgebung der reagierenden Atome große und raumerfüllende Gruppen befinden. Ein bekanntes Beispiel für den Einfluss der sterischen Hinderung ist die Umsetzung von Ketonen in einer Grignard-Reaktion. Wird Di-tert-butylketon bei der Reaktion eingesetzt, ist die Reaktion aufgrund der sehr raumerfüllenden tert-Butyl-Gruppen so stark verlangsamt, dass maximal eine Methylgruppe eingeführt werden kann, noch größere Reste reagieren überhaupt nicht mehr. Ein weiterer beobachtbarer Effekt der sterischen Hinderung ist die Hinderung der Rotation um eine C-C-Einfachbindung innerhalb eines Moleküls.

Besonders bevorzugte Wärmestabilisatoren sind Stoffe aus der Gruppe der sterisch gehinderten Phenole und der sterisch gehinderten Phosphite oder Kupferhalogenide, gegebenenfalls in Kombination mit Alkali- und/oder Erdalkalimetallhalogeniden. Bevorzugte Alkali- und/oder Erdalkalimetallverbindungen sind Kaliumiodid, Kaliumbromid, Natriumchlorid und Calciumchlorid. Aber auch Manganchlorid kann in bevorzugter Ausführungsform in Kombination mit den oben gelisteten Wärmestabilisatoren eingesetzt werden.

Ganz besonders bevorzugt werden als Wärmestabilisatoren sterisch gehinderte Phenole und/oder Phosphite, insbesondere besonders bevorzugt sterisch gehinderte Phenole eingesetzt. Insbesondere ganz besonders bevorzugt wird als Wärmestabilisator c. das sterisch gehinderte Phenol N,N'-Hexamethylen-bis[3-(3,5-di-t-butyl-4-hydroxyphenyl)propionamid [CAS No. 23128-74-7] eingesetzt, das als Irganox® 1098 von der BASF SE, Ludwigshafen angeboten wird.

Weitere Zusatzstoffe als Komponente d. im Sinne der vorliegenden Erfindung sind bevorzugt Stoffe der Reihe UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren oder Elastomermodifikatoren, Füll- und Verstärkungsstoffe, Gleitmittel, Entformungsmittel, Farbstoffe oder Pigmente. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden. Die als Komponente d. einzusetzenden Zusatzstoffe können alleine oder in Mischung bzw. in Form von Masterbatchen eingesetzt werden.

Erfindungsgemäß bevorzugt als Zusatzstoff einzusetzende UV-Stabilisatoren sind substituierte Resorcine, Salicylate, Benzotriazole oder Benzophenone.

Im Falle der erfindungsgemäß als Komponente d. bevorzugt einzusetzenden Schlagzähmodifikatoren oder Elastomermodifikatoren handelt es sich ganz allgemein um Copolymerisate, die bevorzugt aus mindestens zwei der folgenden Reihe an Monomeren aufgebaut sind: Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente. Die Copolymerisate können kompatibilisierende Gruppen, bevorzugt Maleinsäureanhydrid oder Epoxid enthalten.

Erfindungsgemäß als Zusatzstoff bevorzugt einzusetzende Farbstoffe oder Pigmente sind anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone als Farbmittel sowie andere Farbmittel.

Erfindungsgemäß als Zusatzstoff bevorzugt einzusetzende Nukleierungsmittel sind Natrium- oder Calciumphenyfphosphinat, Aluminiumoxid oder Siliziumdioxid oder Mg₃[Si₄O₁₀(OH)₂] [CAS No. 14807-96-6], bevorzugt Mg₃[Si₄O₁₀(OH)₂] in Puderform (=Talkum), besonders bevorzugt Talkum.

Bevorzugt wird mikrokristallines Talkum eingesetzt. Erfindungsgemäß wird unter mikrokristallinem Talkum ein Talkum verstanden, dessen mittlerer d₅₀-Durchmesser gleich oder kleiner als 4,5 Mikron ist. Es wird vorzugsweise ein mikrokristallines Talkum mit einem d₉₅-Schnittdurchmesser von gleich oder kleiner als 15 Mikron verwendet. Unter "mittlerer d₅₀-Durchmesser" ist ein Durchmesser zu verstehen, bei dem 50 Gew.-% der Partikel eine Größe von weniger als dem genannten Durchmesser haben; unter "d₉₅-Schnittdurchmesser" ist ein Durchmesser zu verstehen, bei dem 95 Gew.-% der Partikel eine Größe von weniger als dem genannten Durchmesser haben. Für nichtsphärische Partikel wird die Größe durch den äquivalenten sphärischen Durchmesser bestimmt (Stokes-Durchmesser). Alle diese d₅₀- und d₉₅-Durchmessermessungen werden mit einer Vorrichtung "Sedigraph" (Warenzeichen) durch Schwerkraftsedimentation gemäß der Norm AFNOR X11-683 durchgeführt. Standard-Talkum besitzt einen d₅₀ in der Größenordnung von 8 bis 15 Mikron.

Erfindungsgemäß als Zusatzstoff bevorzugt einzusetzende Gleit- und/oder Entformungsmittel sind langkettige Fettsäuren, insbesondere Stearinsäure, deren Salze, insbesondere Ca- oder Zn-Stearat sowie deren Esterderivate oder Amidderivate, insbesondere Ethylen-bis-stearylamid, Glyzerin-tristearat, Stearylstearat, Montanwachse, insbesondere Ester von Montansäuren mit Ethylenglycol sowie niedermolekulare Polyethylen- bzw. Polypropylenwachse in oxidierter und nicht-oxidierter Form. Erfindungsgemäß besonders bevorzugte Gleit- und/oder Entformungsmittel sind in der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen enthalten. In einer weiteren bevorzugten Ausführungsform enthalten die erfindungsgemäßen Formmassen Mischungen der oben genannten Gleit- und/oder Entformungsmittel. Die insbesondere bevorzugt einzusetzenden Montanwachsester und deren Salze verbessern die Fließfähigkeit von Kunststoffen wie Polyamiden allein durch innere Gleitwirkung, ohne das Molekulargewicht des Polymeren zu reduzieren, Insbesondere ganz besonders bevorzugt werden Ester der Montansäure mit multifunktionellen Alkoholen eingesetzt, die von der Clariant GmbH, als Licowax® E [CAS No. 73138-45-1] angeboten werden.

Erfindungsgemäß als Zusatzstoff bevorzugt einzusetzende Füll- und Verstärkungsstoffe sind faserförmige, nadelförmige oder teilchenförmige Füll- und Verstärkungsstoffe verschieden von Komponente b., dem Kyanit. Besonders bevorzugt sind Kohlenstofffasern, Glaskugeln, amorphe Kieselsäure, Calciumsilicat, Calciummetasilicat, Magnesiumcarbonat, Kaolin, calciniertes Kaolin, Kreide, gepulverter Quarz, Glimmer, Phlogopit, Bariumsulfat, Feldspat, Wollastonit, Montmorillonit oder Glasfasern, ganz besonders bevorzugt Glasfasern, insbesondere bevorzugt Glasfasern aus E-Glas. Die faserförmigen oder teilchenförmigen Verstärkungsstoffe sind in einer bevorzugten Ausführungsform zur besseren Verträglichkeit mit Thermoplasten mit geeigneten Oberflächenmodifizierungen, insbesondere Oberflächenmodifizierungen enthaltend Silanverbindungen versehen.

Im Rahmen der vorliegenden Erfindung insbesondere bevorzugter Zusatzstoff ist Talkum. Das Mineral Talk, bzw. in pulverisierter Form Talkum, ist ein Magnesiumsilikathydrat mit der chemischen Zusammensetzung Mg₃[Si₄O₁₀(OH)₂].

Erfindungsgemäß bevorzugt sind deshalb Mischungen enthaltend
a. Polyamid, bevorzugt PA 6,
b. triklin pinakoidales Aluminiumsilikat,
c. wenigstens einen Wärmestabilisator aus der Gruppe bestehend aus sterisch gehinderten Phenolen, sterisch gehinderten Phosphiten, sterisch gehinderten Phosphaten, Hydrochinonen, aromatischen sekundären Amine, substituierten Resorcinen, Salicylaten, Benzotriazolen, Benzophenonen oder Kupferhalogeniden, gegebenenfalls in Kombination mit Alkali- und/oder Erdalkalimetailhaiogeniden aber auch Manganchlorid, sowie verschieden substituierte Vertreter aller vorgenannten Verbindungen und deren Mischungen sowie
d. Mg₃[Si₄O₁₀(OH)₂].

Erfindungsgemäß besonders bevorzugt sind Mischungen enthaltend
a. 5 bis 69,94 Gew.-% Polyamid, bevorzugt PA 6,
b. 30 bis 80 Gew.-% triklin pinakoidales Aluminiumsilikat,
c. 0,05 bis 5 Gew.-% wenigstens eines Wärmestabilisators aus der Gruppe bestehend aus sterisch gehinderten Phenolen, sterisch gehinderten Phosphiten, sterisch gehinderten Phosphaten, Hydrochinonen, aromatischen sekundären Amine, substituierten Resorcinen, Salicylaten, Benzotriazolen, Benzophenonen oder Kupferhalogeniden, gegebenenfalls in Kombination mit Alkali- und/oder Erdalkalimetallhalogeniden aber auch Manganchlorid, sowie verschieden substituierte Vertreter aller vorgenannten Verbindungen und deren Mischungen und
d. 0,01 bis 60 Gew.-% wenigstens Mg₃[Si₄O₁₀(OH)₂], wobei die Summe aller Gewichtsprozente stets 100 Gew.-% ergibt.

Erfindungsgemäß besonders bevorzugt sind aber auch Mischungen enthaltend
a. Polyamid, bevorzugt PA 6,
b. triklin pinakoidales Aluminiumsilikat,
c. wenigstens einen Wärmestabilisator aus der Gruppe bestehend aus. sterisch gehinderten Phenolen, sterisch gehinderten Phosphiten, sterisch gehinderten Phosphaten, Hydrochinonen, aromatischen sekundären Amine, substituierten Resorcinen, Salicylaten, Benzotriazolen, Benzophenonen oder Kupferhalogeniden, gegebenenfalls in Kombination mit Alkali- und/oder Erdalkalimetallhalogeniden aber auch Manganchlorid, sowie verschieden substituierte Vertreter aller vorgenannten Verbindungen und deren Mischungen sowie
d. Mg₃[Si₄O₁₀(OH)₂] und wenigstens einen Ester von Montansäure mit multifunktionellen Alkoholen.

Erfindungsgemäß besonders bevorzugt sind aber auch Mischungen enthaltend
a. 5 bis 69,94 Gew.-% Polyamid, bevorzugt PA 6,
b. 30 bis 80 Gew.-% triklin pinakoidales Aluminiumsilikat,
c. 0,05 bis 5 Gew.-% wenigstens eines Wärmestabilisators aus der Gruppe bestehend aus sterisch gehinderten Phenolen, sterisch gehinderten Phosphiten, sterisch gehinderten Phosphaten, Hydrochinonen, aromatischen sekundären Amine, substituierten Resorcinen, Salicylaten, Benzotriazolen, Benzophenonen oder Kupferhalogeniden, gegebenenfalls in Kombination mit Alkali- und/oder Erdalkalimetallhalogeniden aber auch Manganchlorid, sowie verschieden substituierte Vertreter aller vorgenannten Verbindungen und deren Mischungen und
d. 0,01 bis 60 Gew,-% wenigstens Mg₃[Si₄O₁₀(OH)₂] und wenigstens einen Ester von Montansäure mit multifunktionellen Alkoholen, wobei die Summe aller Gewichtsprozente stets 100 Gew.-% ergibt.

Erfindungsgemäß insbesondere bevorzugt sind Mischungen enthaltend
a. Polyamid, bevorzugt PA 6,
b. triklin pinakoidales Aluminiumsilikat,
c. wenigstens N,N'-Hexamethylen-bis[3-(3,5-di-t-butyl-4-hydroxyphenyl)propionamid sowie
d. Mg₃[Si₄O₁₀(OH)₂] und wenigstens einen Ester von Montansäure mit multifunktionellen Alkoholen.

Erfindungsgemäß insbesondere bevorzugt sind aber auch Mischungen enthaltend
a. 5 bis 69,94 Gew.-% Polyamid,
b. 30 bis 80 Gew.-% triklin pinakoidales Aluminiumsilikat,
c. 0,05 bis 5 Gew.-% wenigstens N,N'-Hexamethylen-bis[3-(3,5-di-t-butyl-4-hydroxyphenyl)propionamid, und
d. 0,01 bis 60 Gew.-% Mg₃[Si₄O₁₀(OH)₂] und wenigstens einen Ester von Montansäure mit multifunktionellen Alkoholen, wobei die Summe aller Gewichtsprozente stets 100 Gew.-% ergibt.

### Die Erfindung betrifft im einzelnen

Mischungen von triklin pinakoidalem Aluminiumsilikat mit N,N'-Hexamethylen-bis[3-(3,5-di-t-butyl-4-hydroxyphenyl)propionamid,
Mischungen von triklin pinakoidalem Aluminiumsilikat mit Mg₃[Si₄O₁₀(OH)₂] und Mischungen von triklin pinakoidalem Aluminiumsilikat mit wenigstens einem Ester von Montansäure mit multifunktionellen Alkoholen.

Ferner ist Gegenstand der vorliegenden Erfindung ein Verfahren zur Herstellung der erfindungsgemäßen Mischungen, wobei man die Komponenten a. bis d. in entsprechenden Gewichtsanteilen mischt oder vermengt.

Ferner ist Gegenstand der vorliegenden Erfindung ein Verfahren zur Herstellung thermoplastischer Formmassen in dem man die erfindungsgemäßen Mischungen knetet, compoundiert, extrudiert oder walzt, bevorzugt bei einer Temperatur von 220 bis 400°C, besonders bevorzugt durch Compoundieren auf einem gleichläufigen Zweiwellenextruder oder Buss-Kneter.

Es kann vorteilhaft sein, einzelne Komponenten vorzumischen.

Gegenstand der vorliegenden Anmeldung ist auch die Verwendung der aus den erfindungsgemäßen Mischungen herzustellenden thermoplastischen Formmassen im Extrusionsprozess, in Blasformverfahren oder im Spritzguss zur Herstellung von Erzeugnissen, bevorzugt von Formteilen oder Halbzeugen.

Erfindungsgemäße Verfahren zur Herstellung von Erzeugnissen mittels Extrusion, Blasformen oder Spritzguss arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der Extrusion, auch als Strangpressen bezeichnet, werden feste bis dickflüssige härtbare thermoplastische Formmassen unter Druck kontinuierlich aus einer formgebenden Öffnung (auch als Düse, Matrize oder Mundstück bezeichnet) herausgepresst. Dabei entstehen Erzeugnisse mit dem Querschnitt der Öffnung in theoretisch beliebiger Länge (http://de.wikipedia.org/wiki/Extrusion_(Verfahrenstechnik). Die grundsätzlichen Verfahrensschritte des Profil-Extrusionsverfahrens, einer Verfahrensform der Extrusion, sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Das Verfahren des Blasformens ist beispielsweise in http://www.blasformen.com/ beschrieben. Beim Blasformen wird im ersten Verfahrensschritt mittels eines beheizten Extruders Kunststoffgranulat eingezogen, verdichtet, entgast, aufgeheizt, plastifiziert und zu einem plastischen Kunststoffstrang homogenisiert.

Im nächsten Schritt wird die Kunststoffmasse in einen an den Extruder angeflanschten Schlauchkopf geführt. Dort wird die Kunststoffschmelze zu einem Schlauch geformt, der senkrecht aus einer Düse nach unten austritt. Der Schlauchdurchmesser wird mit unterschiedlich großen Dorn- und Düsennormalien, die an den Schlauchkopf angeflanscht werden, an den zu fertigenden Artikel angepasst. Die Schlauchdicke und das daraus resultierende Gewicht der Blasformteile wird durch die Auswahl von unterschiedlichen Durchmesser- Differenzen von Dorn zu Düse vorbestimmt.

Das Verfahren des Spritzgusses zeichnet sich dadurch aus, dass der Rohstoff, also die zu verarbeitende thermoplastische Formmasse enthaltend die erfindungsgemäßen Mischungen, bevorzugt in Granulatform, in einen beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit.)

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst,

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Strang aus der erfindungsgemäßen thermoplastischen Formmasse im Extruder eingesetzt, wobei der Extruder eine Maschine zur Herstellung von Erzeugnissen auf Basis thermoplastischer Formstücke ist. Man unterscheidet

Einschneckenextruder und Doppelschneckenextruder sowie die jeweiligen Untergruppen: konventioneller Einschneckenextruder, förderwirksamer Einschneckenextruder, gegenläufiger Doppelschneckenextruder und gleichläufiger Doppelschneckenextruder.

Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, bevorzugt Formteile, Formkörper oder Halbzeuge, erhältlich durch Extrusion oder Spritzguss der erfindungsgemäßen thermoplastischen Formmassen.

Die vorliegende Erfindung betrifft aber auch die Verwendung von elektrisch isolierenden aber thermisch leitenden Erzeugnissen, bevorzugt Formteilen, Formkörpern oder Halbzeugen, erhältlich durch Extrusion, Profil-Extrusion, Blasformen oder Spritzguss der erfindungsgemäßen Mischungen.

Die vorliegende Erfindung betrifft bevorzugt die Verwendung der durch Extrusion oder Spritzguss hergestellten elektrisch isolierenden aber thermisch leitenden Erzeugnisse, bevorzugt Formteile, Formkörper oder Halbzeuge, für elektrische oder elektronische Bauteile. Diese erfindungsgemäßen Erzeugnisse können bevorzugt in der Kraftfahrzeug-, Elektro-, Elektronik-, Telekommunikations-, Solar-, Informationstechnologie-, ComputerIndustrie, im Haushalt, Sport, in der Medizin oder in der Unterhaltungsindustrie angewandt werden. Insbesondere können erfindungsgemäße Erzeugnisse für Anwendungen eingesetzt werden, bei denen eine verbesserte Wärmeleitung und gute mechanische Eigenschaften notwendig sind. Bevorzugt für derartige Anwendungen ist die Verwendung für Formteile in Fahrzeugen, insbesondere in Kraftfahrzeugen (KFZ).

Die vorliegende Erfindung betrifft deshalb auch die Verwendung der erfindungsgemäßen thermoplastischen Formmassen zur Herstellung von Formteilen und Halbzeugen und wiederum daraus herzustellender Erzeugnisse mit erhöhter Wärmeleitfähigkeit, bevorzugt von Formteilen für Kraftfahrzeuge.

Die vorliegende Erfindung betrifft aber auch die Verwendung von triklin pinakoidaiem Aluminiumsilikat, also Kyanit, zur Verbesserung der Wärmeleitfähigkeit Polyamid basierter Erzeugnisse unter Beibehaltung der mechanischen Eigenschaften und der elektrisch isolierenden Eigenschaften des Polyamids.

Die vorliegende Erfindung betrifft aber auch die Verwendung von triklin pinakoidalem Aluminiumsilikat Al₂O₃SiO₂ in Mischungen für thermoplastische Formmassen.

### Beispiele:

Die einzelnen Komponenten a., b., c. und d. wurden in einem Zweiwellenextruder des Typs ZSK 26 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde bei 70°C im Vakuumtrockenschrank bis zur Gewichtskonstanz getrocknet.

Anschließend wurde das Granulat auf einer Spritzgieß-Maschine vom Typ Arburg SG370-173732 bei Massetemperaturen zwischen 270 und 300°C und Werkzeugtemperaturen zwischen 80 und 100°C zu Schulterstäben (4mm Dicke gem. ISO 528) und Platten mit den Maßen 60 mm · 40 mm · 2 mm verarbeitet. Die Platten wurde anschließend auf die Maße 12,7 mm · 12,7 mm · 2 mm gefräst.

Die mechanischen Eigenschaften der aus den erfindungsgemäßen thermoplastischen Formmassen hergestellten Erzeugnisse wurden im Zugversuch nach ISO 527 bestimmt.

Die Wärmeleitfähigkeit wurde an Platten mit den Maßen 12,7 mm · 12,7 mm · 2 mm nach ISO 22007-4 bestimmt.

Die in der folgenden Tabelle dargestellten Zusammensetzungen wurden alle nach der oben beschriebenen Weise verarbeitet.

| | **Bsp 1** | **Bsp 2** | **Vgl-Bsp 1** |
|---|---|---|---|
| Polyamid 6 | 34,29 | 24,29 | 34,90 |
| Aluminiumsilikat | 65,00 | 75,00 | |
| Montanwachsester | 0,20 | 0,20 | 0,10 |
| Wärmestabilisator | 0,50 | 0,50 | |
| Mikrotalkum | 0,01 | 0,01 | |
| Aluminium-Oxid | | | 50,00 |
| Graphit | | | 15,00 |
| Wärmeleitfähigkeit [W/mK] | 1,01 | 1,53 | 1,67 |
| Bruchspannung [MPa] | 89,00 | 91,00 | 60,00 |
| Bruchdehnung [%] | 4,00 | 1,90 | 0,70 |
| Zug-Modul [MPa] | 9124,00 | 13725,00 | 9805,00 |

### Verwendete Materialien:

Polyamid 6, linear mit einer Viskositätszahl bestimmt in einer 0,5 gew.-%igen Lösung in: 96 gew.-%iger Schwefelsäure bei 25 °C gemäß ISO 307 von 107 ml/g
Kyanit, z.B. Silatherm®-T 1360-400 AST von Quarzwerke GmbH
Montanwachsester, z.B. Licowax® E von Clariant GmbH
Wärmestabilisator, z.B. Irganox® 1098 von BASF SE
Mg₃[Si₄O₁₀(OH)₂] Microtalkum, Mistron® Vapor R, Imerys Talc America
Aluminium-Oxid, z.B. Martoxid® MPS2 von Martinswerk GmbH
Graphit, z.B. Spezialgraphit EG32 von SGL Carbon GmbH

Damit zeigen die erfindungsgemäßen thermoplastischen Formmassen auf Basis von Polyamid bzw. daraus hergestellte Prüfkörper eine hohe thermische Leitfähigkeit bei gleichzeitig elektrisch isolierenden Eigenschaften und gute mechanische Eigenschaften, indem die vom Aluminiumoxid (Vgl-Bsp.=Vergieich) bekannte Abnutzung der eingesetzten Geräte bei der Verarbeitung von erfindungsgemäße Mischungen enthaltenden Polyamidcompounds deutlich reduziert ist.

## Patentansprüche

1. Mischungen enthaltend:
a. 5 bis 69,94 Gew.-% Polyamid,
b. 30 bis 80 Gew.-% triklin pinakoidales Aluminiumsilikat,
c. 0,05 bis 5 Gew.-% wenigstens eines Wärmestabilisators und
d. 0,01 bis 60 Gew.-% wenigstens eines weiteren Zusatzstoffes,
wobei die Summe aller Gewichtsprozente stets 100 Gew.-% ergibt.

2. Thermoplastische Formmassen enthaltend die Mischungen gemäß Anspruch 1, wobei die Mischungen 95 bis 100 Gew.% der thermoplastischen Formmasse ausmachen.

3. Thermoplastische Formmassen gemäß Anspruch 2, **dadurch gekennzeichnet, dass** diese als Komponente a. amorphe oder semikristalline Polyamide enthalten, wobei semikristalline Polyamide eine Schmelzenthalpie von 4 bis 25 J/g, gemessen mit der DSC-Methode gemäß ISO 11357 beim 2. Aufheizen und Integration des Schmelzpeaks und amorphe Polyamide eine Schmelzenthalpie von weniger als 4 J/g, gemessen mit der DSC-Methode gemäß ISO 11357 beim 2. Aufheizen und Integration des Schmelzpeaks besitzen.

4. Thermoplastische Formmassen gemäß Anspruch 3, **dadurch gekennzeichnet, dass** Polyamid 6 oder Polyamid 66, bevorzugt Polyamid 6, eingesetzt wird.

5. Thermoplastische Formmassen gemäß einem der Ansprüche 2 bis 4, **dadurch gekennzeichnet, dass** die Viskositätszahl des Polyamids gemessen in 96%iger Schwefelsäure in Übereinstimmung mit DIN ISO 307 zwischen 80 und 170 ml/g, bevorzugt zwischen 90 und 150 ml/g, besonders bevorzugt zwischen 90 und 130 ml/g, ganz besonders bevorzugt zwischen 95 und 120 ml/g liegt.

6. Thermoplastische Formmassen gemäß einem der Ansprüche 2 bis 5 **dadurch gekennzeichnet, dass** als Komponente c. mindestens einen Stoff ausgewählt aus der Gruppe bestehend aus sterisch gehinderten Phenolen, sterisch gehinderten Phosphiten, sterisch gehinderten Phosphaten, Hydrochinonen, aromatischen sekundären Aminen, substituierten Resorcinen, Salicylaten, Benzotriazolen oder Benzophenonen, Kupferhalogeniden, gegebenenfalls in Kombination mit Alkali- und/oder Erdalkalimetallhalogeniden, sowie verschieden substituierte Vertreter aller vorgenannten Verbindungen und deren Mischungen eingesetzt wird.

7. Thermoplastische Formmassen gemäß Anspruch 6, **dadurch gekennzeichnet, dass** als Komponente c. wenigstens ein sterisch gehindertes Phenol, insbesondere N,N'-Hexamethylen-bis[3-(3,5-di-t-butyl-4-hydroxyphenyl)propionamid eingesetzt wird.

8. Thermoplastische Formmassen gemäß einem der Ansprüche 2 bis 6, **dadurch gekennzeichnet, dass** als Komponente d. Stoffe der Reihe UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren oder Elastomermodifikatoren, Füll- und Verstärkungsstoffe, Gleitmittel, Entformungsmittel, Farbstoffe oder Pigmente eingesetzt werden.

9. Thermoplastische Formmassen gemäß einem der Ansprüche 2 bis 8, **dadurch gekennzeichnet, dass** diese Mischungen a. Polyamid, bevorzugt PA 6, b. triklin pinakoidales Aluminiumsilikat, c. mindestens einen Stoff ausgewählt aus der Gruppe bestehend aus sterisch gehinderten Phenolen, sterisch gehinderten Phosphiten, sterisch gehinderten Phosphaten, Hydrochinonen, aromatischen sekundären Aminen, substituierten Resorcinen, Salicylaten, Benzotriazolen oder Benzophenonen, Kupferhalogeniden, gegebenenfalls in Kombi¬nation mit Alkali- und/oder Erdalkalimetallhalogeniden, sowie verschieden substituierte Vertreter aller vorgenannten Verbindungen und deren Mischungen sowie d. Mg₃[Si₄O₁₀(OH)₂] enthalten.

10. Verfahren zur Herstellung der Mischungen gemäß Anspruch 1, **dadurch gekennzeichnet, dass** die Komponenten a. bis d. in entsprechenden Gewichtsanteilen gemischt oder vermengt werden.

11. Verfahren zur Herstellung der thermoplastischen Formmassen gemäß der Ansprüche 2 bis 9, **dadurch gekennzeichnet, dass** man die Mischungen knetet, compoundiert, extrudiert oder walzt, bevorzugt bei einer Temperatur von 220 bis 400°C.

12. Erzeugnisse, bevorzugt Formteile und Halbzeuge, erhältlich durch Extrudieren, Blasformen oder Spritzgießen der thermoplastischen Formmassen gemäß einem der Ansprüche 2 bis 9.

13. Verwendung von triklin pinakoidalem Aluminiumsilikat zur Verbesserung der Wärmeleitfähigkeit Polyamid basierter Erzeugnisse unter Beibehaltung der mechanischen Eigenschaft und der elektrisch isolierenden Eigenschaft des Polyamids.

14. Verwendung gemäß Anspruch 13, **dadurch gekennzeichnet, dass** das Aluminiumsilikat enthalten in Mischungen für thermoplastische Formmassen eingesetzt wird.

15. Verwendung gemäß Anspruch 14, **dadurch gekennzeichnet, dass** die thermoplastischen Formmassen im Extrusionsprozess, Blasformverfahren oder im Spritzguss zur Herstellung von Erzeugnissen, bevorzugt von Formteilen oder Halbzeugen, eingesetzt werden.

16. Verwendung gemäß Anspruch 15, **dadurch gekennzeichnet, dass** man die Erzeugnisse, bevorzugt Formteile oder Halbzeuge, zur Herstellung von Artikeln für die Elektro-, Elektronik-, Telekommunikations-, Informationstechnologie-, Solar-, Computerindustrie, für den Haushalt, für den Sport, für medizinische Anwendungen oder für die Unterhaltungsindustrie, besonders bevorzugt für Kraftfahrzeuge, einsetzt.

## Claims

1. Mixtures comprising:
a. from 5 to 69.94% by weight of polyamide,
b. from 30 to 80% by weight of triclinic pinacoidal aluminium silicate,
c. from 0.05 to 5% by weight of at least one heat stabilizer and
d. from 0.01 to 60% by weight of at least one other additional substance,
where the sum of all of the percentages by weight is always 100% by weight.

2. Thermoplastic moulding compositions comprising the mixtures according to Claim 1, where the mixtures make up from 95 to 100% by weight of the thermoplastic moulding composition.

3. Thermoplastic moulding compositions according to Claim 2, **characterized in that** these comprise, as component a., amorphous or semicrystalline polyamides, where the enthalpy of fusion of semicrystalline polyamides is from 4 to 25 J/g, measured by the DSC method in accordance with ISO 11357 in the 2^{nd} heating procedure with integration of the melting peak, and the enthalpy of fusion of amorphous polyamides is less than 4 J/g, measured by the DSC method in accordance with ISO 11357 in the 2^{nd} heating procedure with integration of the melting peak.

4. Thermoplastic moulding compositions according to Claim 3, **characterized in that** nylon-6 or nylon-6,6 is used, preferably nylon-6.

5. Thermoplastic moulding compositions according to any of Claims 2 to 4, **characterized in that** the viscosity number of the polyamide, measured in 96% sulphuric acid in accordance with DIN ISO 307, is from 80 to 170 ml/g, preferably from 90 to 150 ml/g, particularly preferably from 90 to 130 ml/g, very particularly preferably from 95 to 120 ml/g.

6. Thermoplastic moulding compositions according to any of Claims 2 to 5, **characterized in that** at least one substance selected from the group consisting of sterically hindered phenols, sterically hindered phosphites, sterically hindered phosphates, hydroquinones, aromatic secondary amines, substituted resorcinols, salicylates, benzotriazoles or benzophenones, copper halides, optionally in combination with alkali metal halides and/or with alkaline earth metal halides, and also variously substituted representatives of all of the abovementioned compounds and mixtures of these is used as component c.

7. Thermoplastic moulding compositions according to Claim 6, **characterized in that** at least one sterically hindered phenol, in particular N,N'-hexamethylenebis[3-(3,5-di-tert-butyl-4-hydroxyphenyl)]propionamide, is used as component c.

8. Thermoplastic moulding compositions according to any of Claims 2 to 6, **characterized in that** substances from the group of UV stabilizers, gamma-radiation stabilizers, hydrolysis stabilizers, antistatic agents, emulsifiers, nucleating agents, plasticizers, processing aids, impact modifiers or elastomer modifiers, fillers and reinforcing materials, lubricants, mould-release agents, dyes and pigments are used as component d.

9. Thermoplastic moulding compositions according to any of Claims 2 to 8, **characterized in that** these mixtures comprise a. polyamide, preferably PA 6, b. triclinic pinacoidal aluminium silicate, c. at least one substance selected from the group consisting of sterically hindered phenols, sterically hindered phosphites, sterically hindered phosphates, hydroquinones, aromatic secondary amines, substituted resorcinols, salicylates, benzotriazoles or benzophenones, copper halides, optionally in combination with alkali metal halides and/or with alkaline earth metal halides, and also variously substituted representatives of all of the abovementioned compounds and mixtures of these, and also d. Mg₃[Si₄O₁₀(OH)₂].

10. Process for the production of the mixtures according to Claim 1, **characterized in that** components a. to d. are mixed or combined in appropriate proportions by weight.

11. Process for the production of the thermoplastic moulding compositions according to Claims 2 to 9, **characterized in that** the mixtures are kneaded, compounded, extruded or rolled, preferably at a temperature of from 220 to 400°C.

12. Products, preferably mouldings and semifinished products, obtainable via extrusion, blow moulding or injection moulding of the thermoplastic moulding compositions according to any of Claims 2 to 9.

13. Use of triclinic pinacoidal aluminium silicate for improving the thermal conductivity of polyamide-based products with retention of the mechanical properties and the electrically insulating properties of the polyamide.

14. Use according to Claim 13, **characterized in that** the aluminium silicate is used in mixtures for thermoplastic moulding compositions.

15. Use according to Claim 14, **characterized in that** the thermoplastic moulding compositions are used in the extrusion process or blow-moulding process or in injection moulding for the production of products, preferably of mouldings or semifinished products.

16. Use according to Claim 15, **characterized in that** the products, preferably mouldings or semifinished products, are used for the production of items for the electrical, electronics, telecommunications, information-technology, solar or computer industry, for households, for sports, for medical applications or for the consumer-electronics industry, particularly preferably for motor vehicles.

## Revendications

1. Mélanges, contenant :
a. 5 à 69,94 % en poids d'un polyamide,
b. 30 à 80 % en poids de silicate d'aluminium triclinique pinacoïdal,
c. 0,05 à 5 % en poids d'au moins un stabilisateur thermique et
d. 0,01 à 60 % en poids d'au moins un additif supplémentaire,
la somme de tous les pourcentages en poids étant toujours de 100 % en poids.

2. Matériaux de moulage thermoplastiques contenant les mélanges selon la revendication 1, les mélanges représentant 95 à 100 % en poids des matériaux de moulage thermoplastiques.

3. Matériaux de moulage thermoplastiques selon la revendication 2, **caractérisés en ce que** ceux-ci contiennent en tant que composant a. des polyamides amorphes ou semi-cristallins, les polyamides semi-cristallins présentant une enthalpie de fusion de 4 à 25 J/g, mesurée avec la méthode DSC selon ISO 11357 lors du 2^{e} chauffage et l'intégration du pic de fusion, et les polyamides amorphes présentant une enthalpie de fusion de moins de 4 J/g, mesurée avec la méthode DSC selon ISO 11357 lors du 2^{e} chauffage et l'intégration du pic de fusion.

4. Matériaux de moulage thermoplastiques selon la revendication 3, **caractérisés en ce que** le polyamide 6 ou le polyamide 66, de préférence le polyamide 6, est utilisé.

5. Matériaux de moulage thermoplastiques selon l'une quelconque des revendications 2 à 4, **caractérisés en ce que** l'indice de viscosité du polyamide mesuré dans de l'acide sulfurique à 96 % conformément à DIN ISO 307 se situe entre 80 et 170 ml/g, de préférence entre 90 et 150 ml/g, de manière particulièrement préférée entre 90 et 130 ml/g, de manière tout particulièrement préférée entre 95 et 120 ml/g.

6. Matériaux de moulage thermoplastiques selon l'une quelconque des revendications 2 à 5, **caractérisés en ce qu'**au moins une substance choisie dans le groupe constitué par les phénols à encombrement stérique, les phosphites à encombrement stérique, les phosphates à encombrement stérique, les hydroquinones, les aminés secondaires aromatiques, les résorcines substituées, les salicylates, les benzotriazoles ou les benzophénones, les halogénures de cuivre, éventuellement en combinaison avec des halogénures de métaux alcalins et/ou alcalino-terreux, ainsi que différents représentants substitués de tous les composés susmentionnés et leurs mélanges, est utilisée en tant que composant c.

7. Matériaux de moulage thermoplastiques selon la revendication 6, **caractérisés en ce qu'**au moins un phénol à encombrement stérique, notamment le N,N'-hexaméthylène-bis[3-(3,5-di-t-butyl-4-hydroxyphényl)propionamide est utilisé en tant que composant c.

8. Matériaux de moulage thermoplastiques selon l'une quelconque des revendications 2 à 6, **caractérisés en ce que** des substances de la série constituée par les stabilisateurs UV, les stabilisateurs de rayons gamma, les stabilisateurs d'hydrolyse, les antistatiques, les émulsifiants, les agents de nucléation, les plastifiants, les adjuvants d'usinage, les modificateurs de la résistance aux impacts ou les modificateurs d'élastomères, les charges et les matières renforçantes, les agents lubrifiants, les agents de démoulage, les colorants ou les pigments, sont utilisées en tant que composant d.

9. Matériaux de moulage thermoplastiques selon l'une quelconque des revendications 2 à 8, **caractérisés en ce que** ces mélanges contiennent a. un polyamide, de préférence le PA 6, b. du silicate d'aluminium triclinique pinacoïdal, c. au moins une substance choisie dans le groupe constitué par les phénols à encombrement stérique, les phosphites à encombrement stérique, les phosphates à encombrement stérique, les hydroquinones, les aminés secondaires aromatiques, les résorcines substituées, les salicylates, les benzotriazoles ou les benzophénones, les halogénures de cuivre, éventuellement en combinaison avec des halogénures de métaux alcalins et/ou alcalino-terreux, ainsi que différents représentants substitués de tous les composés susmentionnés et leurs mélanges, ainsi que d. Mg₃[Si₄O₁₀(OH)₂].

10. Procédé de fabrication des mélanges selon la revendication 1, **caractérisé en ce que** les composants a. à d. sont mélangés ou amalgamés en les proportions en poids appropriées.

11. Procédé de fabrication des matériaux de moulage thermoplastiques selon les revendications 2 à 9, **caractérisé en ce que** les mélanges sont malaxés, mélangés, extrudés ou cylindrés, de préférence à une température de 220 à 400 °C.

12. Produits, de préférence pièces moulées et semi-finis, pouvant être obtenus par extrusion, moulage par soufflage ou moulage par injection des matériaux de moulage thermoplastiques selon les revendications 2 à 9.

13. Utilisation de silicate d'aluminium triclinique pinacoïdal pour améliorer la conductivité thermique de produits à base de polyamide en maintenant les propriétés mécaniques et les propriétés d'isolement électrique du polyamide.

14. Utilisation selon la revendication 13, **caractérisée en ce que** le silicate d'aluminium est utilisé contenu dans des mélanges pour matériaux de moulage thermoplastiques.

15. Utilisation selon la revendication 14, **caractérisée en ce que** les matériaux de moulage thermoplastiques sont utilisés dans un procédé d'extrusion, un procédé de moulage par soufflage ou un moulage par injection pour la fabrication de produits, de préférence de pièces moulées ou de semi-finis.

16. Utilisation selon la revendication 15, **caractérisée en ce que** les produits, de préférence les pièces moulées ou les semi-finis, sont utilisés pour la fabrication d'articles pour l'industrie électrique, électronique, des télécommunications, des technologies de l'information, solaire, informatique, pour le domaine ménager, pour le sport, pour des applications médicales ou pour l'industrie des divertissements, de manière particulièrement préférée pour des véhicules automobiles.
